# EUROPÄISCHE PATENTSCHRIFT

(11) **EP 1 464 426 B1**
(45) Veröffentlichungstag und Bekanntmachung des Hinweises auf die Patenterteilung: **24.10.2007**
(21) Anmeldenummer: 04007773.7
(22) Anmeldetag: 31.03.2004
(51) Int. Cl.: B23B 31/12

(54) **Schnellspannfutter**
Quick release chuck
Mandrin à délocage rapide

(30) Priorität: 04.04.2003 DE 10315407; 13.03.2004 DE 102004012434
(43) Veröffentlichungstag der Anmeldung: 06.10.2004
(73) Patentinhaber: ROBERT BOSCH GMBH, 70442 Stuttgart (DE)
(72) Erfinder: Hoffmann, Erhard, 70771 Leinfelden-Echterdingen (DE); Hecht, Joachim, 71106 Magstadt (DE); Keusch, Siegfried, 73779 Deizisau (DE)

(56) Entgegenhaltungen:
- US-A- 2 544 088
- US-A- 4 711 457
- US-B2- 6 505 840

## Beschreibung

### Stand der Technik

Die Erfindung geht aus von einem Schnellspannfutter nach dem Oberbegriff des Anspruchs 1.

Ein derartiges Schnellspannfutter wird in US 6 505 840 B2 beschrieben.

Aus der DE 101 09 490 A1 ist ein gattungsbildendes Schnellspannfutter für eine Handwerkzeugmaschine bekannt, das eine Steuervorrichtung zur Steuerung von Arretiermitteln aufweist, die zur Aufnahme einer Spannabstützkraft dienen. Das Schnellspannfutter weist ein axial verschiebbares Betätigungselement auf, die mit einem schwenkbar gelagerten Knebel der Steuervorrichtung gekoppelt ist. Wird das Betätigungselement in eine von einem Aufnähmebereich des Schnellspannfutters abgewandte, axiale Richtung nach hinten verschoben, wird der Knebel verschwenkt, wodurch über ein Übertragungsmittel zwischen den von Tellerfedern gebildeten Arretiermitteln und einem Grundkörper des Schnellspannfutters eine Kraftschlussverbindung zur Aufnahme der Spannabstützkraft hergestellt wird.

### Vorteile der Erfindung

Die Erfindung geht aus von einem Schnellspannfutter gemäß Anspruch 1, insbesondere für eine Handwerkzeugmaschine, mit einem Betätigungselement und mit einer Steuervorrichtung, die zumindest ein Mittel zur Steuerung zumindest eines Arretiermittels umfasst, das zur Aufnahme einer Spannabstützkraft dient, wobei über das von der Steuervorrichtung steuerbare Arretiermittel eine Formschlussverbindung zur Aufnahme der Spannabstützkraft herstellbar ist und das Mittel zur Steuerung eine Verriegelungsfeder ist, die zum Verriegeln des Arretiermittels dient. Es kann ein besonders komfortables und einfach zu bedienendes Schnellspannfutter erzielt werden. Große Betätigungskräfte zur kraftschlüssigen Fixierung des Arretiermittels können vermieden werden, und es kann ein geringer Verschleiß des Arretiermittels über eine lange Lebensdauer erzielt werden. Es kann eine hohe Schlagbohrfestigkeit erreicht werden bzw. ein Werkzeug kann sicher mit einer hohen, für einen Schlagbohrbetrieb geeigneten Spannkraft im Schnellspannfutter gesichert werden. Ferner kann eine bestimmte Abfolge von Verfahrensschritten einfach sichergestellt werden, wodurch eine mehrteilig ausgeführte Betätigungseinrichtung und/oder von einem Bediener durchzuführende, komplizierte Betätigungsabfolgen vermeidbar sind.

Vorzugsweise ist das Arretiermittel zur Herstellung der Formschlussverbindung gegenüber einem Grundkörper verdrehbar, insbesondere in Umfangsrichtung verdrehbar. Die Formschlussverbindung kann demnach durch eine Verdrehung des Arretiermittels erfolgen.

Eine sichere und zuverlässige Steuerung des Arretiermittels erfolgt dadurch, dass das Mittel durch eine Verriegelungsfeder gebildet ist. Die Verriegelungsfeder kann dabei von verschiedenen, dem Fachmann als geeignet erscheinenden Federarten gebildet sein, wie beispielsweise von einer Schraubendruckfeder usw. Weist die Verriegelungsfeder jedoch im Wesentlichen eine ringförmige Gestalt auf, kann diese besonders Platz sparend integriert werden.

Ist das Werkzeug über ein vom Betätigungselement betätigbares Federmittel mittelbar spannbar, kann die Zuverlässigkeit des Spannfutters erhöht werden. Weist das Federmittel zum mittelbaren Spannen des Werkzeugs im Wesentlichen eine ringförmige Gestalt auf, ist die Anordnung wenig staubanfällig. Dazu weist das Federmittel günstigerweise wenigstens zwei sich umfangsseitig gegenüberliegende Rastelemente zum Einrasten im Betätigungselement auf. Es können vorteilhaft Werkzeugdurchmesser mit sehr unterschiedlichen Größen gespannt werden, beispielsweise von 1,5 mm bis zu 13 mm.

In einer günstigen Weiterbildung der Erfindung ist das Betätigungselement über zumindest einen Betätigungsbereich von einem Arretiermittel wirkungsmäßig entkoppelbar. Enge Toleranzen und damit verbundene unerwünschte Auswirkungen, wie hohe Herstellkosten, Schmutzempfindlichkeit usw., können vermieden werden. Es kann vorteilhaft erst verriegelt und dann gespannt werden. Eine konstruktiv einfache Lösung kann dabei insbesondere erreicht werden, wenn das Betätigungselement über eine Verriegelungsfeder mit dem Mittel koppel- und entkoppelbar ist.

Ist das Betätigungselement zum Spannen eines Werkzeugs drehbar gelagert, können konstruktiv einfach, insbesondere über Gewindeverbindungen, vorteilhafte Übersetzungen erzielt werden, und es können mit kleinen Betätigungskräften große Spannkräfte erreicht werden. Durch die Steuervorrichtung kann einfach erreicht werden, dass zum Spannen das Betätigungselement vorteilhaft weniger als um 250° verdreht werden muss, so dass ein besonders komfortables Spannen eines Werkzeugs erreichbar ist. Grundsätzlich ist jedoch auch denkbar, dass anstatt Gewindeverbindungen Hebelmechanismen usw. eingesetzt werden.

Vorteilhaft ist das Betätigungselement in axialer Richtung verschiebbar gelagert, wodurch eine axiale Betätigung einer Schnellverstellung zugeordnet und eine einfache, selbsterklärende Bedienung erreicht werden kann. Vorteilhafterweise weist der Grundkörper wenigstens eine Gleitfläche auf, auf der das Arretiermittel axial verschiebbar ist.

In einer weiteren Ausgestaltung wird vorgeschlagen, dass das Schnellspannfutter zumindest einen in wenigstens einer Betriebsstellung über ein Federelement in axialer Richtung belasteten Spannbacken aufweist. Es kann ein automatisches Schließen des Schnellspannfutters bis zu einem bestimmten Grad erreicht werden, und der Komfort kann gesteigert werden. Günstigerweise kann vorgesehen sein, dass das Schnellspannfutter zumindest einen in wenigstens einer Betriebsstellung über ein Mittel in radialer Richtung, insbesondere in radialer Richtung nach innen, belasteten Spannbacken aufweist. Damit kann ein unerwünschtes Verklemmen des Spannbackens sicher vermieden werden. Das Mittel kann dabei von einem Übertragungsmittel mit einer Schrägfläche und/oder von einem Federmittel usw. gebildet sein.

Ferner wird eine Handwerkzeugmaschine mit einem Schnellspannfutter gemäß Patentanspruch 1 vorgeschlagen. Besonders vorteilhaft lässt sich die Erfindung bei Bohrmaschinen, Schlagbohrmaschinen und/oder Schraubern einsetzen.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: eine Schlagbohrmaschine mit einem erfindungsgemäßen Schnellspannfutter,
- Fig. 2: einen Längsschnitt durch ein erfindungsgemäßes Schnellspannfutter schräg von oben mit einem Werkzeug, das einen kleinen Durchmesser aufweist,
- Fig. 3: ein Detail des Schnellspannfutters aus Figur 2 mit sichtbarem Federmittel zum Spannen des Werkzeugs,
- Fig. 4: einen Querschnitt durch das Schnellspannfutter entlang der Linie IV-IV,
- Fig. 5: einen Querschnitt durch das Schnellspannfutter entlang der Linie V-V,
- Fig. 6: einen Querschnitt durch das Schnellspannfutter entsprechend Figur 4 mit eingerasteter Verriegelungsfeder,
- Fig. 7: einen Querschnitt durch das Schnellspannfutter entsprechend Figur 5 mit um 90° im Gegenuhrzeigersinn weiter gedrehtem Betätigungselement,
- Fig. 8: einen Querschnitt durch das Schnellspannfutter bei arretiertem und gespanntem Werkzeug,
- Fig. 9: eine Ansicht eines bevorzugten Grundkörpers, und
- Fig. 10: eine Ansicht eines bevorzugten Arretierelements.

### Beschreibung des Ausführungsbeispiels

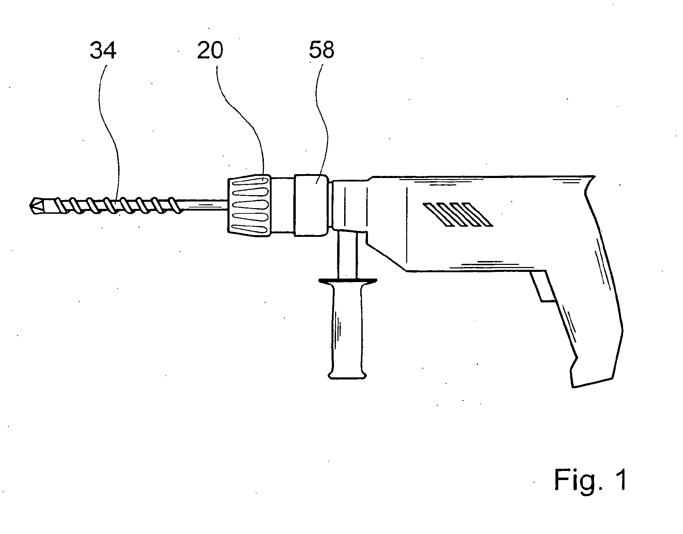

Figur 1 zeigt eine Schlagbohrmaschine mit einem erfindungsgemäßen Schnellspannfutter mit einem Werkzeug 34, welches mit Hilfe eines Betätigungselements 20 arretierbar und einspannbar ist. Das Betätigungselement 20 ist bereichsweise von einer Abdeckhülse 58 umgeben.

In den Figuren sind in der Beschreibung im Wesentlichen gleiche Bauteile grundsätzlich mit den gleichen Bezugszeichen beziffert.

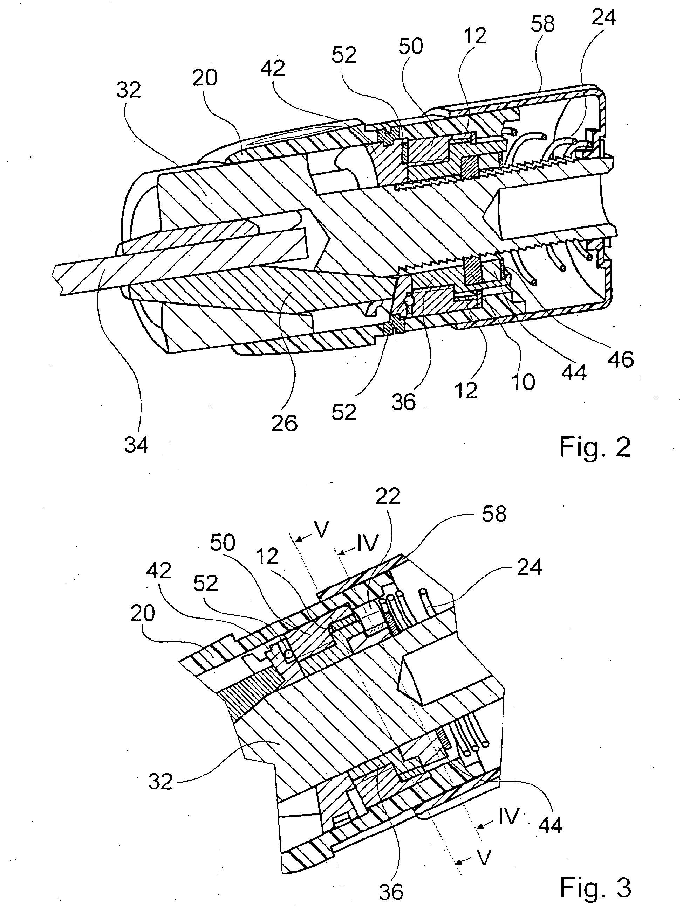

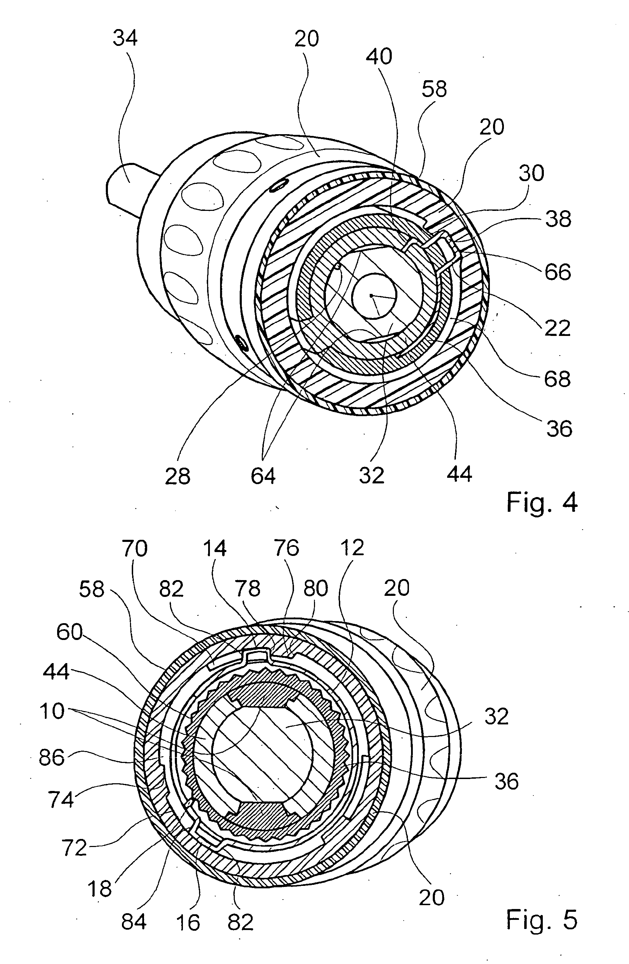

Das in den folgenden Figuren 2 bis 8 näher beschriebene Schnellspannfutter weist ein Betätigungselement 20 auf, das über einen Betätigungsbereich von einer Fixierhülse 36, in der Arretiermittel 10 gehalten sind, wirkungsmäßig entkoppelbar ist, und zwar über eine Verriegelungsfeder 22 (Figur 4), die von einem bandförmigen Federstahl gebildet ist, im Wesentlichen eine ringförmige Gestalt aufweist und in einer Umfangsnut der Fixierhülse 36 angeordnet ist. Die Fixierhülse 36 umgibt einen Grundkörper 32 und weist an ihrem werkzeugnahen Ende einen kleineren Umfang auf als an ihrem werkzeugfernen Ende. Unter werkzeugnah bzw. werkzeugfern ist jeweils der Bereich der Fixierhülse 36 zu verstehen, der nah oder entfernt zu dem eingebauten Werkzeug 34 bzw. nah oder entfernt zu für das Werkzeug 34 vorgesehenen Spannbacken 26 angeordnet ist. Am werkzeugnahen Ende ist die Fixierhülse 36 von einer als Mutter ausgebildeten Spannhülse 50 umgeben. Benachbart zum werkzeugnahen Ende der Fixierhülse 36 ist ein Axiallager 52 angeordnet, das wiederum an eine Führungshülse 42 grenzt.

Am werkzeugfernen Ende der Fixierhülse 36 ist sowohl deren äußerer Umfang als auch deren Innendurchmesser erweitert, wobei in etwa in der axialen Mitte der Fixierhülse 36 eine stufenförmige Erweiterung ausgebildet ist. In dem so gebildeten Hohlraum zwischen dem Grundkörper 32 und der Fixierhülse 36 sind ein oder mehrere Arretiermittel 10 am Umfang des Grundkörpers 32 angeordnet. An ihrem werkzeugfernen Ende umgreift die Fixierhülse 36 einen Haltering 44, der in Verbindung mit einem Sicherungsring 46 ein Herausfallen der Arretiermittel 10 verhindert. Angrenzend an die Stufe ist am erweiterten Umfang die Fixierhülse 36 von einem als Rastfeder ausgebildeten Federmittel 12 umgeben, dessen Funktion in der späteren Figur 5 näher erläutert wird.

Befindet sich das Betätigungselement 20, in Richtung zum freien Ende betrachtet, in einer definierten, einer Öffnungsstellung zugeordneten Endstellung, liegen die Arretiermittel 10 über einer nicht näher bezeichneten Gleitfläche des Grundkörpers 32. In Umfangsrichtung sind beispielsweise um 180° versetzt zwei Arretiermittel 10 über entsprechenden Gleitflächen angeordnet.

Soll das Werkzeug 34 in das Schnellspannfutter eingeführt werden, wird das Betätigungselement 20 in die vom freien Ende abgewandte Richtung axial nach hinten gezogen, wodurch über die Führungshülse 42 in axialer Richtung formschlüssig mit dem Betätigungselement 20 gekoppelte Spannbacken 26 in die vom freien Ende abgewandte Richtung nach hinten und radial nach außen geführt werden. Die Spannbacken 26 öffnen sich, und das Werkzeug 34 kann eingeschoben werden.

Die Führungshülse 42 ist auf dem Grundkörper 32 axial verschiebbar gelagert und ist über eine nicht dargestellte Federnutverbindung mit dem Grundkörper 32 drehfest verbunden. Es ist auch möglich, die Führungshülse 42 drehbar auf dem Grundkörper 32 zu lagern und eine tangentiale Führung der Führungshülse 42 über die Spannbacken 26 zu erreichen.

Ist das Werkzeug 34 zwischen die Spannbacken 26 eingeführt und wird das Betätigungselement 20 vom Bediener losgelassen, wird dasselbe über ein als Schraubendruckfeder ausgebildetes Federelement 24 in Richtung zum freien Ende des Schnellspannfutters geschoben. Das als Schraubendruckfeder ausgebildete Federelement 24 ist dabei an der Abdeckhülse 58 abgestützt und wirkt über den Haltering 44 auf das Betätigungselement 20, das wiederum mit einer Axialkraft über das Axiallager 52 und über die Führungshülse 42 auf die Spannbacken 26 wirkt. Durch die Axialkraft werden die Spannbacken 26 entlang Schrägflächen von Ausnehmungen in dem Grundkörper 32 radial nach innen geführt und sichern das Werkzeug 34 mit einer kleinen Spannkraft.

In Figur 3 ist ein Detail des Schnellspannfutters aus Figur 2 dargestellt. Die Anordnung ist so gedreht, dass sowohl das Federmittel 12 zum Spannen des Werkzeugs als auch die Verriegelungsfeder 22, die zum Verriegeln der Arretiermittel 10 dient, zu sehen sind.

Bezüglich gleich bleibender Merkmale und Funktionen kann grundsätzlich auf die Beschreibung des Ausführungsbeispiels in der Figur 2 verwiesen werden. Die im Wesentlichen ringförmige Verriegelungsfeder 22 ist radial nach innen durch die Fixierhülse 36 hindurchgeführt.

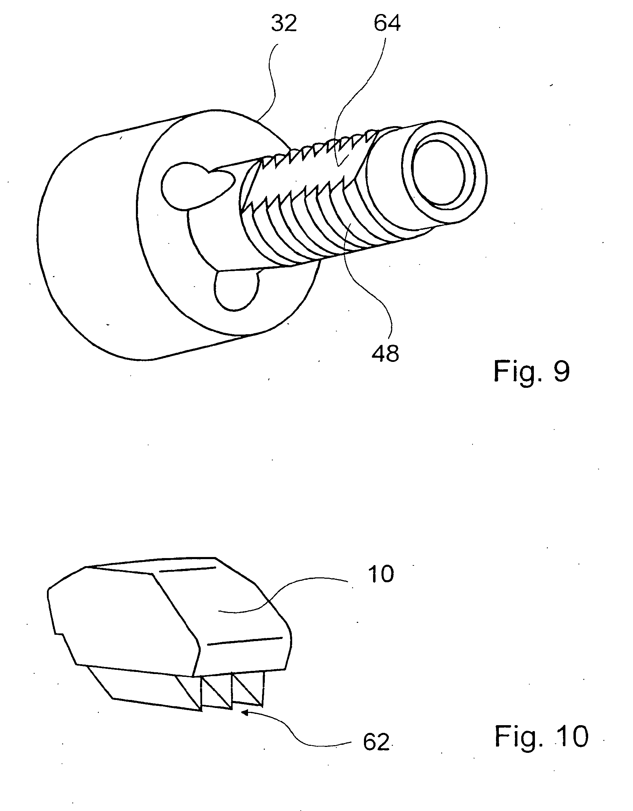

Figur 4 zeigt einen Querschnitt durch das Schnellspannfutter entlang der Linie IV-IV in Figur 3, wobei die Blickrichtung vom werkzeugfernen zum werkzeugnahen Ende der Fixierhülse 36 verläuft. Durch Drehen des Betätigungselements 20 gegen den Uhrzeigersinn wird über die Verriegelungsfeder 22, die in einer Nut 66 im Betätigungselement 20 gehalten ist, die Fixierhülse 36 verdreht, und damit werden die Arretiermittel 10 auf dem Umfang des Grundkörpers 32 verschoben. Eine Nase 30 bildet einen Anschlag für die Verriegelungsfeder 22 in der Nut 66. In der Lösestellung liegen die Arretiermittel 10 auf einer Gleitfläche 64 des Grundkörpers 32, auf der sie axial verschiebbar sind. Die Spannhülse 50 dreht sich ebenfalls mit. Schließlich greifen die Arretiermittel 10 in eine Verzahnung 48 des Grundkörpers 32 (Figur 9) ein. Durch das Eingreifen in die Verzahnung 48 sind die Arretiermittel 10 axial auf dem Grundkörper 32 festgelegt.

Sobald die Verriegelungsfeder 22 mit ihrem Finger 40 in eine Nut 28 im Grundkörper 32 einrasten kann, schnappt ein von dem Betätigungselement 20 angetriebener Vorsprung 38 der Verriegelungsfeder 22 aus der Nut 66 heraus und gelangt in eine auslaufende Nut 68. Die in der Fixierhülse 36 eingebauten Teile sind nunmehr über die Verriegelungsfeder 22 sowohl axial als auch radial zum Grundkörper 32 festgelegt.

Bei einem weiteren Verdrehen des Betätigungselements 20 wird nur noch die Spannhülse 50 über das als Rastfeder ausgebildete Federelement 12 angetrieben, wie in Figur 5 näher erläutert ist, in der ein Querschnitt durch das Schnellspannfutter entlang der Linie V-V der Figur 3 dargestellt ist.

Das im Wesentlichen ringförmig als Rastfeder ausgebildete Federmittel 12 weist zwei sich am Umfang des Grundkörpers 32 in etwa gegenüberliegende Rastelemente 14, 16 auf. Das Rastelement 14 greift in eine Nut 70 des Betätigungselements 20 ein und liegt mit seiner in der Figur rechten Seite an einer Kante 78 einer Nase 76 des Betätigungselements 20 an, die in Umfangsrichtung entfernt von dem Rastelement 14 eine weitere Kante 80 aufweist. Das zweite Rastelement 16 greift in eine Nut 72 des Betätigungselements 20 ein und weist einen ersten Anschlag 82 und einen zweiten Anschlag 84 auf. Entfernt von dem Rastelement 16 wird die Nut 72 von einer Kante 74 einer Nase 86 begrenzt.

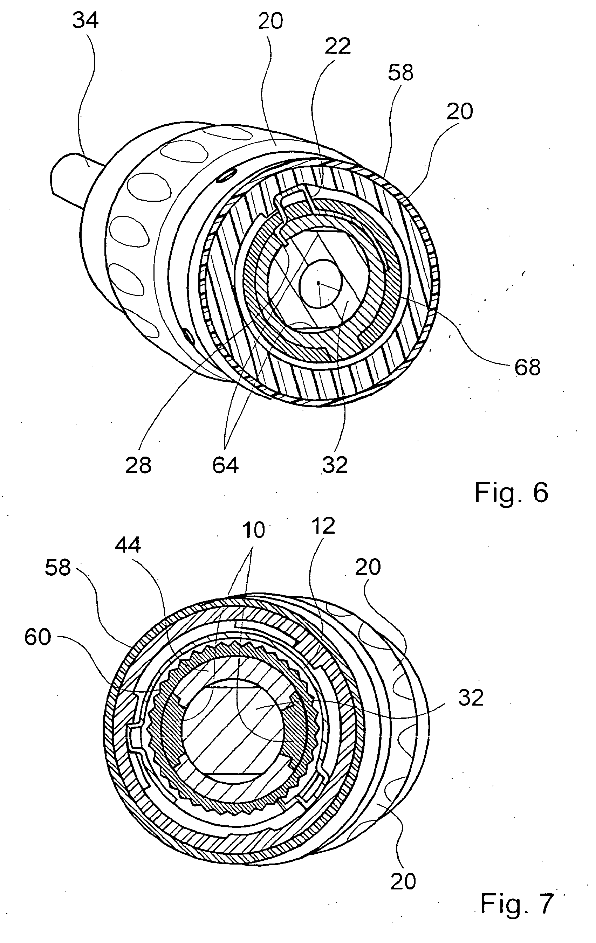

Wenn, wie in Figur 3 beschrieben, die Verriegelungsfeder 22 in die Nut 28 des Grundkörpers 32 eingegriffen hat, wird das Betätigungselement 20, zum manuellen Spannen des Werkzeugs 34 mit einer für den Betrieb ausgebildeten Spannkraft, in Richtung zum freien Ende betrachtet, im Gegenuhrzeigersinn weiter gedreht. Diese Situation ist in Figur 6 analog zu Figur 4 dargestellt: Die Verriegelungsfeder 22 ist in die Nut 28 des Grundkörpers 32 eingerastet, womit die Arretiermittel 10 axial und radial festgelegt sind.

Nunmehr kann nur noch die Spannhülse 50 von dem Betätigungselement 20 über das als Rastfeder ausgebildete Federelement 12 angetrieben werden. Damit beginnt das Spannen des Werkzeugs 34.

Sobald ein auf das Federelement 12 wirkendes Moment eine voreingestellte, konstruktive Größe übersteigt drückt die Kante 74 das Rastelement 16 nach unten in Richtung Grundkörper 32 und die Nase 86 wird über das Rastelement 14 geschoben. Dadurch greift ein fingerartiges Rastelement 18 des Federmittels 12 in eine Verrastung 60 der Fixierhülse 36, und das Federmittel 12 verrastet mit der Fixierhülse 36. Gleichzeitig ist ab dieser Position bei einem weiteren Verdrehen das Betätigungselement 20 über die Anlage des Rastelements 14 an der Kante 80 der Nase 76 gesichert. Dies ist in Figur 7 analog zu Figur 5 dargestellt, wobei die Elemente bezüglich des Grundkörpers 32 nunmehr um etwa 90° verdreht sind.

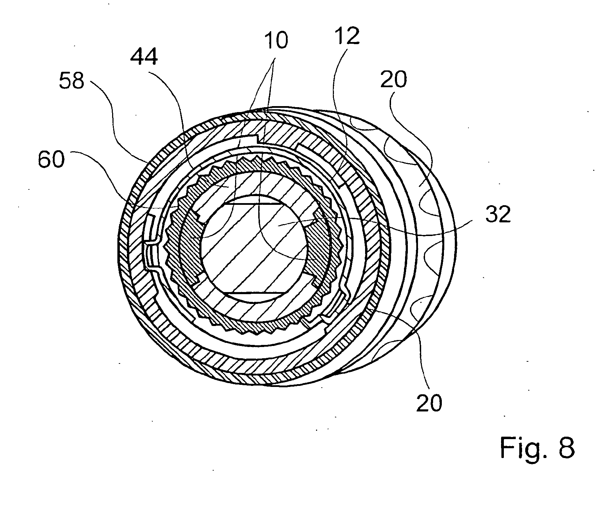

Die Endposition der Elemente und des Betätigungselements 20 beim Spannen des Werkzeugs 34 ist in Figur 8 dargestellt. Die Arretiermittel 10 sind mit dem Grundkörper 32 verrastet und das Federelement 12 sichert das Betätigungselement 20.

Zum Lösen des Schnellspannfutters wird das Betätigungselement 20, in Richtung zum freien Ende des Schnellspannfutters betrachtet, im Uhrzeigersinn gedreht. Die Sicherung des Betätigungselements 20 wird gelöst, und die Kante 80 der Nase 76 rastet über das Rastelement 14. Die Nase 86 gibt das zweite Rastelement 16 frei, und das Rastelement 18 geht außer Eingriff mit der Fixierhülse 36. Die Spannhülse 50 dreht sich gegenüber der Fixierhülse 36, und die Spannung wird aufgehoben. Die Verriegelungsfeder 22 rastet in die Nut 66 ein, und die Verriegelung der Arretiermittel 10 wird gelöst; diese werden auf die Gleitfläche 64 des Grundkörpers 32 geschoben.

Einen bevorzugten Grundkörper 32 zeigt Figur 9. Der Grundkörper 32 weist einen zylinderförmigen Bereich auf, dessen Umfang teilweise mit einer Verzahnung 48 versehen ist, in die nicht dargestellte Arretiermittel 10 eingreifen können. Der zylinderförmige Bereich weist außerdem zumindest eine Gleitfläche 64 auf, die abgeplattet und mit einer glatten Oberfläche versehen ist. Auf der vom Betrachter abgewandten Seite des Grundkörpers 32 ist auf der anderen Seite des zylinderförmigen Bereichs eine weitere solche Gleitfläche 64 vorgesehen, so dass beispielsweise zwei Arretiermittel 10 vorgesehen sein können.

Figur 10 zeigt ein bevorzugtes Arretiermittel 10. Dieses weist an seiner einem nicht dargestellten Grundkörper 32 zugewandten Seite eine Verzahnung 62 auf, mit der das Arretiermittel 10 in eine Verzahnung 48 des Grundkörpers 32 eingreifen kann.

### Bezugszeichen

- 10: Arretiermittel
- 12: Federmittel
- 14: Rastelement
- 16: Rastelement
- 18: Rastelement
- 20: Betätigungselement
- 22: Verriegelungsfeder
- 24: Federelement
- 26: Spannbacken
- 28: Nut
- 30: Nase
- 32: Grundkörper
- 34: Werkzeug
- 36: Fixierhülse
- 38: Vorsprung
- 40: Finger
- 42: Führungshülse
- 44: Haltering
- 46: Sicherungsring
- 48: Verzahnung
- 50: Spannhülse
- 52: Axiallager
- 58: Abdeckhülse
- 60: Verrastung
- 62: Verzahnung
- 64: Gleitfläche
- 66: Nut
- 68: Nut
- 70: Nut
- 72: Nut
- 74: Kante
- 76: Nase
- 78: Kante
- 80: Kante
- 82: Anschlag
- 84: Anschlag
- 86: Nase

## Patentansprüche

1. Schnellspannfutter, insbesondere für eine Handwerkzeugmaschine, mit einem Betätigungselement (20) und mit einer Steuervorrichtung, die zumindest ein Mittel (12, 22, 36, 42, 50) zur Steuerung zumindest eines Arretiermittels (10) umfasst, das zur Aufnahme einer Spannabstützkraft dient, wobei über das von der Steuervorrichtung steuerbare Arretiermittel (10) eine Formschlussverbindung zur Aufnahme der Spannabstützkraft herstellbar ist, **dadurch gekennzeichnet, dass** das Mittel zur Steuerung eine Verriegelungsfeder (22) ist, die zum Verriegeln des Arretiermittels (10) dient.

2. Schnellspannfutter nach Anspruch 1, **dadurch gekennzeichnet, dass** das Arretiermittel (10) zur Herstellung der Formschlussverbindung gegenüber einem Grundkörper (32) verdrehbar ist.

3. Schnellspannfutter nach einem der vorhergehenden Ansprüche, **dadurch gekennzeichnet, dass** das Werkzeug (34) über ein vom Betätigungselement (20) betätigbares Federmittel (12) mittelbar spannbar ist.

4. Schnellspannfutter nach einem der vorhergehenden Ansprüche, **dadurch gekennzeichnet, dass** das Betätigungselement (20) über zumindest einen Betätigungsbereich von dem Arretiermittel (10) wirkungsmäßig entkoppelbar ist.

5. Schnellspannfutter nach einem der vorhergehenden Ansprüche, **dadurch gekennzeichnet, dass** das Betätigungselement (20) zum Spannen des Werkzeugs (34) drehbar gelagert ist.

6. Schnellspannfutter nach einem der vorhergehenden Ansprüche, **dadurch gekennzeichnet, dass** das Betätigungselement (20) in axialer Richtung verschiebbar gelagert ist.

7. Schnellspannfutter nach einem der vorhergehenden Ansprüche, **dadurch gekennzeichnet, dass** der Grundkörper (32) wenigstens eine Gleitfläche (64) aufweist, auf der das Arretiermittel (10) axial verschiebbar ist.

8. Schnellspannfutter nach einem der vorhergehenden Ansprüche, **dadurch gekennzeichnet, dass** das Betätigungselement (20) über die Verriegelungsfeder (22) mit dem Grundkörper (32) koppelbar und entkoppelbar ist.

9. Schnellspannfutter nach Anspruch 8, **dadurch gekennzeichnet, dass** die Verriegelungsfeder (22) im Wesentlichen eine ringförmige Gestalt aufweist.

10. Schnellspannfutter nach Anspruch 3, **dadurch gekennzeichnet, dass** das Federmittel (12) zum Spannen des Werkzeugs (34) im Wesentlichen eine ringförmige Gestalt aufweist.

11. Schnellspannfutter nach Anspruch 10, **dadurch gekennzeichnet, dass** das Federmittel (12) wenigstens zwei sich umfangsseitig gegenüberliegende Rastelemente (14, 16) zum Einrasten im Betätigungselement (20) aufweist.

12. Schnellspannfutter nach einem der vorhergehenden Ansprüche, **gekennzeichnet durch** zumindest einen in wenigstens einer Betriebsstellung über ein Federelement (24) in axialer Richtung belasteten Spannbacken (26)

13. Handwerkzeugmaschine mit einem Schnellspannfutter nach einem der vorhergehenden Ansprüche.

## Claims

1. Quick-release chuck, in particular for a hand-held power tool, having an actuating element (20) and having a control apparatus which comprises at least one means (12, 22, 36, 42, 50) for controlling at least one arresting means (10) which serves to absorb a clamping support force, it being possible for a form-fitting connection for absorbing the clamping support force to be produced via the arresting means (10) which can be controlled by the control apparatus, **characterized in that** the means for control is a locking spring (22) which serves to lock the arresting means (10).

2. Quick-release chuck according to Claim 1, **characterized in that** the arresting means (10) can be rotated with respect to a basic body (32) in order to produce the form-fitting connection.

3. Quick-release chuck according to one of the preceding claims, **characterized in that** the tool (34) can be clamped indirectly via a spring means (12) which can be actuated by the actuating element (20).

4. Quick-release chuck according to one of the preceding claims, **characterized in that** the actuating element (20) can be decoupled in effect terms by the arresting means (10) over at least one actuating range.

5. Quick-release chuck according to one of the preceding claims, **characterized in that** the actuating element (20) is mounted rotatably for clamping the tool (34).

6. Quick-release chuck according to one of the preceding claims, **characterized in that** the actuating element (20) is mounted displaceably in the axial direction.

7. Quick-release chuck according to one of the preceding claims, **characterized in that** the basic body (32) has at least one sliding face (64), on which the arresting means (10) is axially displaceable.

8. Quick-release chuck according to one of the preceding claims, **characterized in that** the actuating element (20) can be coupled to and decoupled from the basic body (32) via the locking spring (22).

9. Quick-release chuck according to Claim 8, **characterized in that** the locking spring (22) has substantially an annular design.

10. Quick-release chuck according to Claim 3, **characterized in that** the spring means (12) for clamping the tool (34) has substantially an annular design.

11. Quick-release chuck according to Claim 10, **characterized in that** the spring means (12) has at least two latching elements (14, 16) which lie opposite one another on the circumferential side, for latching in the actuating element (20).

12. Quick-release chuck according to one of the preceding claims, **characterized by** at least one clamping jaw (26) which is loaded in the axial direction via a spring element (24) in at least one operating position.

13. Hand-held power tool having a quick-release chuck according to one of the preceding claims.

## Revendications

1. Mandrin à serrage rapide notamment pour une machine-outil portative comportant un élément d'actionnement (20) et un dispositif de commande comprenant au moins un moyen (12, 22, 36, 42, 50) pour commander au moins un moyen de blocage (10) recevant la réaction à la force de serrage,
le moyen de blocage (10) commandé par le dispositif de commande réalisant une liaison par la forme pour recevoir la réaction à la force de serrage,
**caractérisé en ce que**
le moyen de commande est un ressort de verrouillage (22) servant à verrouiller le moyen de blocage (10).

2. Mandrin à serrage rapide selon la revendication 1,
**caractérisé en ce que**
le moyen de blocage (10) tourne par rapport au corps de base (32) pour réaliser la liaison par la forme.

3. Mandrin à serrage rapide selon l'une quelconque des revendication précédentes,
**caractérisé en ce que**
l'outil (34) est serré par l'intermédiaire d'un moyen à ressort (12) actionné par l'élément d'actionnement (20).

4. Mandrin à serrage rapide selon l'une quelconque des revendications précédentes,
**caractérisé en ce que**
l'élément d'actionnement (20) peut être découplé de sa coopération avec le moyen de blocage (10) par au moins une zone d'actionnement.

5. Mandrin à serrage rapide selon l'une quelconque des revendications précédentes,
**caractérisé en ce que**
l'élément d'actionnement (20) est monté à rotation pour serrer l'outil (34).

6. Mandrin à serrage rapide selon l'une quelconque des revendications précédentes,
**caractérisé en ce que**
l'élément d'actionnement (20) est monté coulissant dans la direction axiale.

7. Mandrin à serrage rapide selon l'une quelconque des revendications précédentes,
**caractérisé en ce que**
le corps de base (32) comporte au moins une surface de glissement (64) sur laquelle le moyen de blocage (10) peut coulisser axialement.

8. Mandrin à serrage rapide selon l'une quelconque des revendications précédentes,
**caractérisé en ce que**
l'élément d'actionnement (20) est couplé et découplé avec le corps de base (32) par le ressort de verrouillage (22).

9. Mandrin à serrage rapide selon la revendication 8,
**caractérisé en ce que**
le ressort de verrouillage (22) a pour l'essentiel, une forme annulaire.

10. Mandrin à serrage rapide selon la revendication 3,
**caractérisé en ce que**
le moyen à ressort (12) présente une forme essentiellement annulaire pour serrer l'outil (34).

11. Mandrin à serrage rapide selon la revendication 10,
**caractérisé en ce que**
le moyen à ressort (12) comporte au moins deux éléments d'accrochage (14, 16) opposés dans la direction périphérique, pour s'accrocher dans l'élément d'actionnement (20).

12. Mandrin à serrage rapide selon l'une quelconque des revendications précédentes,
**caractérisé par**
au moins un mors (26) sollicité dans la direction axiale dans au moins une position de fonctionnement par un élément à ressort (24).

13. Machine-outil portative comportant un mandrin rapide selon l'une quelconque des revendications précédentes.
